# EUROPEAN PATENT APPLICATION

(11) **EP 4 528 333 A1**
(43) Date of publication of application: **26.03.2025**
(21) Application number: 23864591.5
(22) Date of filing: 04.09.2023
(51) Int. Cl.: G01S 19/05

(54) **MOTION DATA ACQUISITION METHOD AND ELECTRONIC DEVICE**

(30) Priority: 15.09.2022 CN 202211130506
(71) Applicant: Huawei Technologies Co., Ltd., Shenzhen, Guangdong 518129 (CN)
(72) Inventor: LI, Keshan, Shenzhen, Guangdong 518129 (CN); JIANG, Jin, Shenzhen, Guangdong 518129 (CN); XIAO, Chaoyi, Shenzhen, Guangdong 518129 (CN)
(74) Representative: Gill Jennings & Every LLP
(86) International application number: PCT/CN2023/116733
(87) International publication number: WO 2024/055859

(57) **Abstract**

A method for obtaining motion data, and an electronic device are provided, and relate to the field of terminal technologies. The electronic device (100) stores at least one historical ground and a ground parameter corresponding to the historical ground. After a playground mode is enabled, a plurality of pieces of first positioning data corresponding to different locations of a user in a motion process are obtained, and a target ground is determined from the at least one historical ground based on the plurality of pieces of first positioning data and the ground parameter corresponding to the historical ground (S501). A plurality of pieces of second positioning data corresponding to different locations of the user in the motion process are continued to be obtained, and a motion route of the user on the target ground in the motion process is determined based on the plurality of pieces of first positioning data, the plurality of pieces of second positioning data, a ground parameter corresponding to the target ground, and a preset error threshold (S502). The preset error threshold is set to a small value. Therefore, even if the user deviates from a current track for a quite small distance, the electronic device may not align a deviated location of the user to an original route, but may truly reflect a route after the user deviates from the track, to provide an overall route of the user running in the playground mode more accurately, provide a reference for the user, and improve user experience.

## Description

This application claims priority to Chinese Patent Application No. 202211130506.5, filed with the China National Intellectual Property Administration on September 15, 2022 and entitled "METHOD FOR OBTAINING MOTION DATA, AND ELECTRONIC DEVICE", which is incorporated herein by reference in its entirety.

### TECHNICAL FIELD

This application relates to the field of terminal technologies, and in particular, to a method for obtaining motion data, and an electronic device.

### BACKGROUND

A user may usually wear an electronic device such as a watch or a band to engage in sports such as running. A playground mode may usually be set in the electronic device. When the user runs in the playground mode, the electronic device may obtain global positioning system (global positioning system, GPS) data of the user at different locations in real time, determine a running speed, a running distance, a running route, and the like of the user on a playground based on the GPS data, and finally display related motion data such as the determined running distance, running route, and running speed to the user. In this way, the user can easily learn about a motion status of the user.

However, currently, when the electronic device is in the playground mode, the user needs to first run one or two laps each time, so that the electronic device can determine a playground on which the user is currently located and parameters such as a center point and a deflection angle of the playground. In this case, time for determining the playground is long, and time for determining, based on the playground and the parameter of the playground, motion data of the user for running is also long, reducing efficiency of obtaining related motion data by the electronic device. In addition, when the electronic device is in the playground mode, if a running location of the user deviates from a current track, it is difficult to accurately display a deviated route of the user in a determined motion route of the electronic device, affecting user experience.

### SUMMARY

Embodiments of this application provide a method for obtaining motion data, and an electronic device, to store a historical ground and a ground parameter during previous motion of a user in the electronic device. In this way, when the user moves on a same ground again, the electronic device can quickly determine the ground and obtain a corresponding ground parameter. In addition, even if the user deviates from a current track for a quite small distance, the electronic device can truly reflect a route after the user deviates from the track, improving user experience.

To achieve the foregoing objective, the following technical solutions are used in embodiments of this application.

According to a first aspect, a method for obtaining motion data is provided. The method is applied to an electronic device. The electronic device stores at least one historical ground and a ground parameter corresponding to the historical ground. In the method for obtaining motion data, after a playground mode is enabled, the electronic device obtains a plurality of pieces of first positioning data corresponding to different locations of a user in a motion process, and determines a target ground from the at least one historical ground based on the plurality of pieces of first positioning data and the ground parameter corresponding to the historical ground. Then, the electronic device obtains a plurality of pieces of second positioning data corresponding to different locations of the user in the motion process, and determines a motion route of the user on the target ground in the motion process based on the plurality of pieces of first positioning data, the plurality of pieces of second positioning data, a ground parameter corresponding to the target ground, and a preset error threshold. A time point of obtaining the second positioning data is later than a time point of obtaining the first positioning data.

The preset error threshold is less than a threshold for drawing a motion route in a currently common playground mode. Therefore, even if the user deviates from a current track for a quite small distance, the electronic device may not align a deviated location of the user to an original route, but may truly reflect a route after the user deviates from the track, to provide an overall route of the user running in the playground mode more accurately, provide a reference for the user, and improve user experience.

In addition, in the foregoing method, the electronic device may store a historical ground parameter of user motion. When the user moves on the stored historical ground again, the historical ground (namely, the target ground) and the ground parameter can be quickly obtained without a need to spend excessive time re-determining the historical ground parameter. This can improve efficiency of obtaining the target ground and the ground parameter by the electronic device.

The motion data in the solution of this application may include a running speed, a running distance, a running route, and the like. The ground parameter of the target ground may include center point positioning data, a deflection angle, and the like of the target ground.

In a possible implementation of the first aspect, the electronic device may further first determine a location point corresponding to target first positioning data in the plurality of pieces of first positioning data. Then, for each historical ground, a center point location of the historical ground is obtained based on the ground parameter corresponding to the historical ground, and a first distance between the center point location and the location point corresponding to the target first positioning data is obtained. If the first distance is less than or equal to a first preset length, the electronic device may determine the historical ground as the target ground. In this implementation, the target ground may be determined by determining the center point location of the historical ground.

In a possible implementation of the first aspect, if first distances corresponding to a plurality of historical grounds are less than or equal to first preset duration, the electronic device uses the plurality of historical grounds as a plurality of candidate grounds. For each candidate ground, the electronic device obtains a data error of each of the plurality of pieces of first positioning data based on a ground parameter corresponding to the candidate ground. If the data error of each piece of first positioning data is less than or equal to a preset difference, the electronic device determines the candidate ground as the target ground. In this implementation, the target ground may be determined from the plurality of candidate historical grounds by using the data error of the first positioning data.

In a possible implementation of the first aspect, for each piece of first positioning data, the electronic device determines, based on the ground parameter corresponding to the candidate ground and the first positioning data, a location area, in the candidate ground, of a location point corresponding to the first positioning data. The candidate ground includes a plurality of location areas. Based on the location area, the electronic device determines a reference location of the candidate ground, determines a second distance between the location point corresponding to the first positioning data and the reference location, and obtains a third distance between the location area and the reference location. Finally, the electronic device determines an absolute value of a difference between the second distance and the third distance as the data error of the first positioning data.

The data error of the first positioning data may represent a possibility that the user is on the candidate ground when the first positioning data is obtained. When the data error is small, it may indicate that when the first positioning data is obtained, there is a high probability that the user is on the candidate ground. However, when the data error is small, it may indicate that when the first positioning data is obtained, there is a low probability that the user is on the candidate ground.

In this implementation, the data error of each of the plurality of pieces of first positioning data for one candidate ground may be calculated. In addition, for the one candidate ground, if data errors of a plurality of consecutive pieces of first positioning data are small, it may be considered that the user may remain on the candidate ground. In this case, the electronic device may determine the candidate ground as the target ground. In addition, accuracy of the target ground determined in this manner is also high.

In a possible implementation of the first aspect, for the target ground, the electronic device determines a data error of each piece of positioning data in the plurality of pieces of first positioning data and the plurality of pieces of second positioning data based on the ground parameter corresponding to the target ground. For a specific manner of determining the data error, refer to the foregoing possible implementations. If positioning data whose data error is less than or equal to the preset error threshold exists, the electronic device aligns a location point corresponding to the positioning data with a location point corresponding to previous positioning data, and continues to obtain a smooth motion route. Alternatively, if positioning data whose data error is greater than the preset error threshold exists, the electronic device connects a location point corresponding to the positioning data to a location point corresponding to previous positioning data, and continues to obtain a motion route. In this implementation, the preset error threshold is small. Therefore, even if the user deviates from the current track for a quite small distance, the electronic device may truly reflect a route after the user deviates from the track, to provide an overall route of the user running in the playground mode more accurately, provide a reference for the user, and improve user experience.

In a possible implementation of the first aspect, the electronic device determines a target ground parameter of the target ground based on a plurality of pieces of third positioning data corresponding to different locations of the user in the motion process. The plurality of pieces of third positioning data include the plurality of pieces of first positioning data and a part of the plurality of pieces of second positioning data. The electronic device determines, based on a plurality of pieces of fourth positioning data corresponding to different locations of the user in the motion process, a first parameter error corresponding to the target ground parameter of the target ground, and a second parameter error corresponding to a stored ground parameter of the target ground. A time point of obtaining the fourth positioning data is later than a time point of obtaining the third positioning data, and the plurality of pieces of second positioning data include the plurality of pieces of fourth positioning data. If the first parameter error is less than the second parameter error, the stored ground parameter corresponding to the target ground is updated to the target ground parameter after the user motion ends. In this implementation, after the user motion ends, the electronic device stores the target ground parameter corresponding to the target ground and a ground parameter with a smaller parameter error in the stored ground parameter, and deletes a ground parameter with a larger error, to ensure that the ground parameter of the target ground is more accurate, and ensure that a running speed, a running distance, and the like of the user can be more accurately determined when the user runs on the target ground again subsequently.

In a possible implementation of the first aspect, for each piece of fourth positioning data, the electronic device determines a first data error of the fourth positioning data based on the fourth positioning data and the target ground parameter. Then, the electronic device determines an average error of first data errors of the plurality of pieces of fourth positioning data, and determines the average error as the first parameter error. The first parameter error represents accuracy of the target ground parameter. If the first parameter error is small, the accuracy of the target ground parameter is high, and therefore, a motion route that is of the user and that is determined based on the target ground parameter is more accurate.

In addition, in a possible implementation of the first aspect, for each piece of fourth positioning data, the electronic device determines a second data error of the fourth positioning data based on the fourth positioning data and the stored ground parameter of the target ground. Then, the electronic device determines an average error of second data errors of the plurality of pieces of fourth positioning data, and determines the average error as the second parameter error. The second parameter error represents accuracy of each stored ground parameter of the target ground. If the second parameter error is small, the accuracy of the stored ground parameter of the target ground is high, and therefore, a motion route that is of the user and that is determined based on the stored previous ground parameter of the target ground is more accurate.

In a possible implementation of the first aspect, if no target ground is determined from the at least one historical ground based on the plurality of pieces of first positioning data and the ground parameter corresponding to the historical ground, the electronic device obtains corresponding fifth positioning data of the user in the motion process. A quantity of the fifth positioning data is greater than a quantity of the first positioning data. The electronic device determines, based on the fifth positioning data, a ground parameter of a ground on which the user is currently located, and after the user motion ends, stores the ground parameter of the ground on which the user is currently located. In this implementation, if the electronic device does not store the ground parameter of the current motion ground of the user, the electronic device may determine the positioning data of the user in the current motion process as the ground parameter of the current motion ground, and store the ground parameter. When the user comes to the ground again and moves, the electronic device can quickly obtain the ground and the ground parameter without a need to spend excessive time re-determining the ground and the ground parameter through calculation. This improves efficiency of obtaining the target ground and the ground parameter by the electronic device.

In a possible implementation of the first aspect, the ground parameter corresponding to the historical ground includes ground center point positioning data, a ground deflection angle, and the like.

In a possible implementation of the first aspect, the electronic device may further determine the motion route of the user, such as motion duration and a motion speed, based on a plurality of different locations of the user on the target ground in the motion process. The motion includes running.

In a possible implementation of the first aspect, the electronic device may display the motion route in the motion process of the user or when the motion ends, to provide a motion reference for the user.

According to a second aspect, an electronic device is provided. The electronic device includes a memory and one or more processors. The memory is coupled to the processor. The memory stores computer program code. The computer program code includes computer instructions. When the computer instructions are executed by the processor, the electronic device is enabled to perform the method for obtaining motion data according to any one of the implementations of the first aspect.

According to a third aspect, a computer-readable storage medium is provided, including computer instructions. When the computer instructions are run on an electronic device, the electronic device is enabled to perform the method for obtaining motion data according to any one of the implementations of the first aspect.

According to a fourth aspect, a computer program product is provided. When the computer program product is run on a computer, the computer is enabled to perform the method for obtaining motion data according to any one of the implementations of the first aspect.

It may be understood that for beneficial effects that can be achieved by the electronic device according to the second aspect, the computer-readable storage medium according to the third aspect, and the computer program product according to the fourth aspect, refer to the beneficial effects in any one of the first aspect and the possible design manners of the first aspect. Details are not described herein again.

### BRIEF DESCRIPTION OF DRAWINGS

FIG. 1 is a diagram of establishing a plane rectangular coordinate system based on a playground parameter according to an embodiment of this application;
FIG. 2 is a diagram of a running route according to an embodiment of this application;
FIG. 3 is a diagram of a positioning system according to an embodiment of this application;
FIG. 4 is a diagram of a structure of an electronic device according to an embodiment of this application;
FIG. 5 is a schematic flowchart of a method for obtaining motion data according to an embodiment of this application;
FIG. 6 is a diagram of a user running on a playground according to an embodiment of this application;
FIG. 7 is a schematic flowchart of another method for obtaining motion data according to an embodiment of this application;
FIG. 8 is a diagram of a plurality of target playgrounds according to an embodiment of this application;
FIG. 9 is a diagram of another running route according to an embodiment of this application;
FIG. 10 is a diagram of a watch display page according to an embodiment of this application;
FIG. 11 is a diagram of determining a ground parameter according to an embodiment of this application; and
FIG. 12 is a diagram of a structure of another electronic device according to an embodiment of this application.

### DESCRIPTION OF EMBODIMENTS

The following describes technical solutions in embodiments of this application with reference to accompanying drawings in embodiments of this application. In the descriptions of this application, unless otherwise specified, "/" represents an "or" relationship between associated objects. For example, A/B may represent A or B. In this application, "and/or" is merely an association relationship for describing associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application for distinguishing between same items or similar items that have basically same functions or purposes. A person skilled in the art may understand that the words such as "first" and "second" do not limit a quantity or an execution sequence, and the words such as "first" and "second" do not indicate a definite difference. In addition, in embodiments of this application, words such as "example" or "for example" are used to represent giving an example, an illustration, or a description. Any embodiment or design described by "example" or "for example" in embodiments of this application should not be construed as being more preferred or advantageous than another embodiment or design. Exactly, use of the words such as "example" or "for example" is intended to present a related concept in a specific manner for ease of understanding.

In addition, a service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

When running on a playground with a track, a user usually wants to learn about a location, a running speed, a running distance, and the like of the user. In this case, the user may wear an electronic device such as a watch or a band that has a motion function. In these electronic devices, a corresponding playground mode is usually set. When the user runs on the playground, the electronic device can be controlled to enable the playground mode. After the playground mode is enabled, the electronic device may obtain, in a running process of the user, global positioning system (global positioning system, GPS) data of the user at different locations in real time, determine motion data such as a running distance, a running route, and a running speed of the user on the playground based on the GPS data, and finally display the motion data.

After the playground mode is enabled, the electronic device usually needs to first determine GPS data of a center point of the playground, a deflection angle of the playground, and the like. A playground with a standard-specification track is used as an example. GPS data of a center point of the playground may be determined based on different GPS data of the user running one or two laps on the track. A deflection angle of the playground may be represented by an included angle between a longest axis of the playground and directions of due north, due south, due east, or due west.

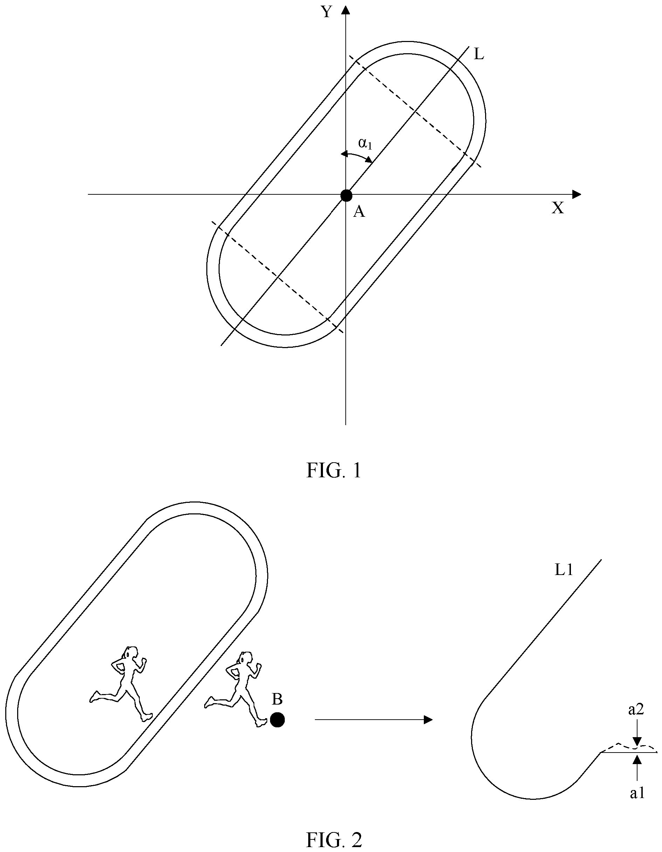

As shown in FIG. 1, an example in which a standard-specification track is a track with a lap of 400 meters is used, and the track includes two semicircular tracks and two straight tracks. The radius of each of the two semicircular tracks is 36.5 meters, and the length of the straight track is 84.39 meters. When the user runs, the electronic device collects GPS data of the user at different locations, and determines a center point A of a playground in FIG. 1 and GPS data of the center point based on GPS data from one or two laps. Then, a rectangular coordinate system is established by using the center point A of the playground as an origin, using the due north direction as a Y-axis direction, and using the due east direction as an X-axis direction. An included angle α₁ between a longest axis L of the playground and the Y axis is determined as a deflection angle of the playground. Then, the GPS data of the user during running is obtained, and the GPS data is converted into a coordinate point in the playground coordinate system by using the center point GPS and the deflection angle of the playground, to determine a location of the user on the playground. After a plurality of locations of the user during running are determined, a running route of the user may be obtained, and a running speed, a running distance, and the like of the user are determined.

The electronic device may provide related motion data during running for the user in the foregoing manner. However, each time the user runs, the user needs to run one or two laps first, so that the electronic device can determine a playground on which the user is currently located and parameters such as a center point and a deflection angle of the playground. In this case, time for determining the playground and the parameters is long, and time for determining the running speed and the running distance of the user based on the playground and the parameters is also long, reducing efficiency of obtaining the related motion data by the electronic device.

In addition, each time the user runs, the user needs to run one or two laps first before learning about the running speed, the running distance, and the like of the user. This also affects use experience of the user.

In addition, in a current playground mode, the electronic device may detect a distance for which the user deviates from a track during running. When the distance is within a specific threshold, the electronic device may align a deviated location of the user to a running route whose shape is similar to that of the track. When the distance exceeds the threshold, the electronic device connects a previous location of a running route to a currently deviated location point of the user, so that the deviated location and an original route are connected, to form a new route. In the current playground mode, the threshold is usually set to be large, for example, 60 to 70 meters. In this way, after the previous location of the running route is connected to the currently deviated location point of the user, a long straight route segment clearly appears on the new route. For example, as shown in FIG. 2, a large segment of route a1 appears on a running route L1. To be specific, the route a1 shows a straight route of the user from an original running route to a location point B. However, the straight route cannot completely represent a real route of the user moving to the location point B, and the real route of the user may be a route a2. Therefore, in the target playground mode, a determined running route is not precise enough, and cannot accurately reflect a real running route of the user, affecting user experience.

Based on the foregoing content, an embodiment of this application provides a method for obtaining motion data. In the method, the electronic device pre-stores a historical ground of user motion and a ground parameter corresponding to the historical ground. The electronic device obtains a plurality of pieces of first positioning data corresponding to different locations of the user in a motion process, and determines a target ground from at least one pre-stored historical ground based on the plurality of pieces of first positioning data and the ground parameter corresponding to the historical ground. Then, the electronic device continues to obtain a plurality of pieces of second positioning data corresponding to different locations of the user in the motion process, and determines a motion route of the user on the target ground in the motion process based on the plurality of pieces of second positioning data, a preset error threshold (for example, the foregoing threshold) set to be smaller, and a ground parameter corresponding to the target ground.

A time point of obtaining the second positioning data is later than a time point of obtaining the first positioning data. A ground of the user motion includes at least one standard-specification track.

In the foregoing method in this embodiment of this application, the electronic device may store the ground parameter of the historical ground of the user motion. When the user moves on the stored historical ground again, the historical ground (namely, the target ground) and the ground parameter can be quickly obtained without a need to spend excessive time re-determining the ground parameter. This can improve efficiency of obtaining the target ground and the ground parameter by the electronic device.

In addition, the threshold is set to a smaller value, for example, 20 to 30 meters. Therefore, even if the user deviates from the current track for a quite small distance, the electronic device may not align the deviated location of the user to the original route, but may truly reflect a route after the user deviates from the track, to provide an overall route of the user running in the playground mode more accurately, provide a reference for the user, and improve user experience.

The ground parameters of the target ground and the historical ground may include ground center point positioning data, a ground deflection angle, a circle center location of a circular track, and the like.

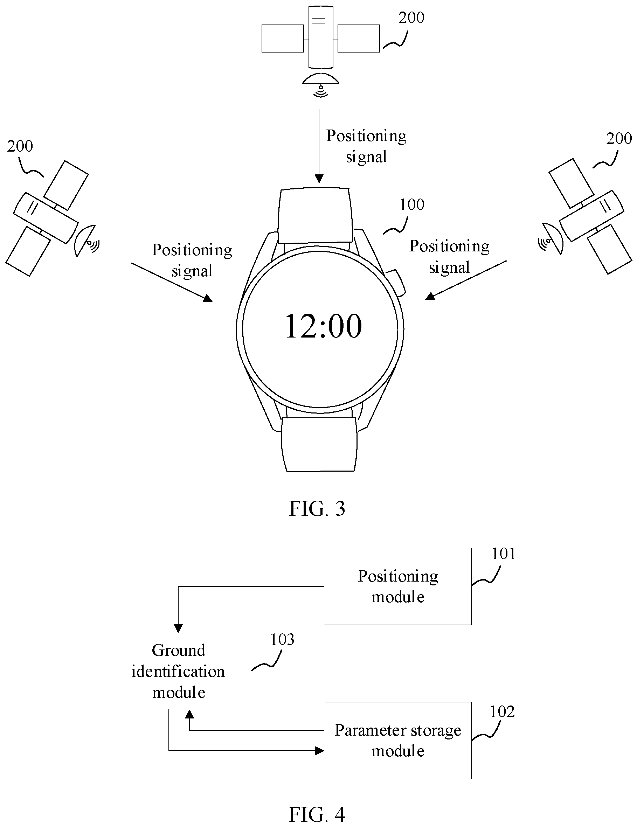

The foregoing method for obtaining motion data in this embodiment of this application may be applied to a positioning system. As shown in FIG. 3, the positioning system may include an electronic device 100 and at least one GPS positioning satellite 200. For example, the electronic device 100 is a watch. When a user carries the electronic device 100 and moves on a current ground, the electronic device 100 may obtain a plurality of positioning signals sent by the GPS positioning satellite 200, to determine GPS data of the user at different locations based on the plurality of positioning signals. The electronic device 100 obtains, based on a plurality of pieces of GPS data, a target ground near a ground on which the user is located. Then, the electronic device 100 may determine the target ground from a pre-stored historical ground based on the plurality of pieces of GPS data, and obtain a corresponding ground parameter. In this way, the electronic device 100 may position a location of the user on the target ground based on the ground parameter of the target ground and positioning data of the user in a current motion process, and determine a motion route of the user with reference to the ground parameter of the target ground, the location of the user, and a preset difference set to be smaller.

In the foregoing positioning system, the electronic device 100 may store the historical ground and a corresponding ground parameter of the user motion. When the user moves on the stored historical ground again, the historical ground (namely, the target ground) and the ground parameter can be quickly obtained without a need to spend excessive time re-determining the ground parameter. This can improve efficiency of obtaining the target ground and the ground parameter by the electronic device 100.

In addition, a threshold is set to a smaller value, for example, 20 to 30 meters. Therefore, even if the user deviates from a current track for a quite small distance, the electronic device may not align a deviated location of the user to an original route, but may truly reflect a route after the user deviates from the track, to provide an overall route of the user running in the playground mode more accurately. The route may also be smooth, providing a reference for the user and improving user experience.

The electronic device 100 in this embodiment of this application may be a smart wrist-worn device that has computing and storage functions and is easy to carry during motion, for example, a smartwatch or a smart band, or may be a device such as a mobile phone or a tablet computer.

In this embodiment of this application, the user motion may include walking, running, and the like. A motion ground of the user may include a standard-specification track and field ground, sports field, playground, and the like, and each of these grounds includes at least one track. A size and length of each track of the standard-specification grounds also comply with a unified standard specification. A track with a lap of 400 meters is used as an example. The track includes two semicircular tracks and two straight tracks. The standard specification indicates that the radius of each of the two semicircular tracks is 36.5 meters, and the length of the straight track is usually 84.39 meters.

For example, the electronic device 100 is a smartwatch (referred to as a "watch"). As shown in FIG. 4, the electronic device 100 may include a positioning module 101, a parameter storage module 102, and a ground identification module 103. The positioning module 101 may communicate with a GPS positioning satellite, to obtain a positioning signal sent by the GPS positioning satellite in a motion process of a user, and obtain positioning data of the user in the motion process based on the positioning signal. The positioning module 101 may further send the positioning data to the ground identification module 103. The ground identification module 103 obtains a historical ground and a ground parameter that are pre-stored from the parameter storage module 102, and determines a target ground and a corresponding ground parameter from the historical ground based on the positioning data of the user. In addition, the ground identification module 103 may further determine a new ground parameter (namely, a target ground parameter) of the target ground based on the positioning data of the user moving on the target ground, and when an error of the new ground parameter is less than an error of the stored ground parameter, save the new ground parameter of the target ground into the parameter storage module 102, to continuously update the ground parameter. In this way, the ground parameter of the target ground is increasingly accurate, and when the user moves on the target ground again, a motion route of the user may be determined based on a more accurate ground parameter and the like. The parameter storage module 102 may provide a storage medium for storing parameters, data, and the like, and store the historical ground and the historical ground parameter.

The electronic device 100 may store the historical ground and the corresponding ground parameter of user motion. When the user moves on the stored historical ground again, the historical ground (namely, the target ground) and the ground parameter can be quickly obtained without a need to spend excessive time re-determining the ground parameter. This can improve efficiency of obtaining the target ground and the ground parameter by the electronic device 100.

In addition, a threshold is set to a smaller value, for example, 20 to 30 meters. Therefore, even if the user deviates from a current track for a quite small distance, the electronic device may not align a deviated location of the user to an original route, but may truly reflect a route after the user deviates from the track, to provide an overall route of the user running in a playground mode more accurately. The route may also be smooth, providing a reference for the user and improving user experience.

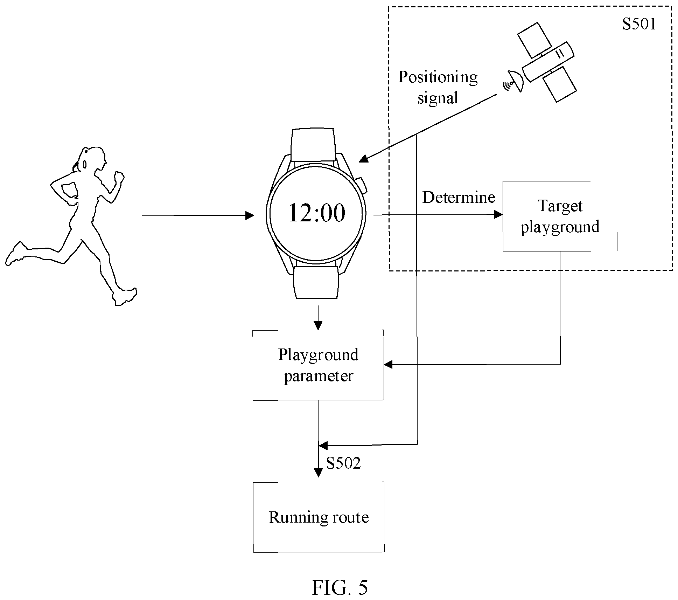

The following describes a method for obtaining motion data in embodiments of this application by using an example in which an electronic device is a smartwatch and a motion ground is a playground. Motion of a user on the playground is running. As shown in FIG. 5, a method for determining a ground in an embodiment of this application includes the following steps S501 and S502.

S501: After a playground mode is enabled, a watch obtains a plurality of pieces of first positioning data corresponding to different locations of a user in a motion process, and determines a target playground from at least one stored historical playground based on the plurality of pieces of first positioning data and a playground parameter corresponding to the historical playground stored in the watch.

The positioning data may include GPS data, global navigation satellite system (global navigation satellite system, GNSS) data, cellular positioning data, wireless-fidelity (wireless-fidelity, WIFI) positioning data, and the like. In this embodiment of this application, the GPS data is used as an example to describe the method for determining a ground.

In some embodiments, the watch may determine a location point corresponding to target first positioning data in the plurality of pieces of first positioning data. For each historical playground, the watch obtains a center point location of the historical playground based on the playground parameter corresponding to the historical playground, and obtains a first distance between the center point location and the location point corresponding to the target first positioning data. If the first distance is less than or equal to a first preset length, the watch determines the historical playground as the target playground.

The target first positioning data may represent positioning data of the user at a current location after the playground mode of the watch is enabled. The watch may obtain positioning data based on a received positioning signal. The user may first run and then control the watch to enable the playground mode, or may first control the watch to enable the playground mode and then run. The target first positioning data may represent a 1^{st} piece of first positioning data in the plurality of pieces of first positioning data.

In this embodiment of this application, the watch may pre-store a historical playground and a corresponding playground parameter existing when the user runs previously. The playground parameter of the historical playground includes playground reference point positioning data, a playground deflection angle, a quantity of tracks, and the like. The reference point positioning data may represent center point positioning data, circle center point positioning data of a playground semicircular track, and the like. The watch may determine a reference point location of the historical playground based on the reference point positioning data of the historical playground, for example, determine a center point location, a circle center point location of the playground semicircular track, and the like.

The first preset length may be determined based on distances between center points of stored historical playgrounds. For example, the first preset length may be between 109 meters and 111 meters such as 109 meters, 110 meters, or 111 meters.

If the first distance between the center point of the historical playground and the location point corresponding to the target first positioning data is less than or equal to the first preset length, it indicates that the user may run on the historical playground. In this case, the historical playground may be determined as the target playground. If the first distance between the center point of the historical playground and the location point corresponding to the first positioning data is greater than the first preset length, it indicates that the user may not run on the historical playground. In this case, the historical playground may not be determined as the target playground.

In the foregoing embodiment, whether a distance between the center point of the historical playground and an initial location of the user is less than or equal to the first preset length is determined, so that whether the historical playground is the target playground may be determined. Usually, if there is a playground within the first preset length near a location of the user, there is only one playground. Therefore, after the watch determines the target playground, there is a high probability that the target playground is a playground on which the user is currently located.

In some embodiments, after determining the target playground, the watch may further check the target playground, to further determine accuracy of the target playground. In addition, the watch may check the target playground based on a plurality of pieces of first positioning data of the user on the target playground. The plurality of pieces of first positioning data include corresponding target first positioning data existing when the user is at the initial location.

In some embodiments, the plurality of pieces of first positioning data represent positioning data obtained by the watch when the user is at different locations in a running process on the target playground. It may be understood that the watch first obtains the target first positioning data, and then obtains other first positioning data. There may also be a time sequence between a plurality of pieces of second positioning data.

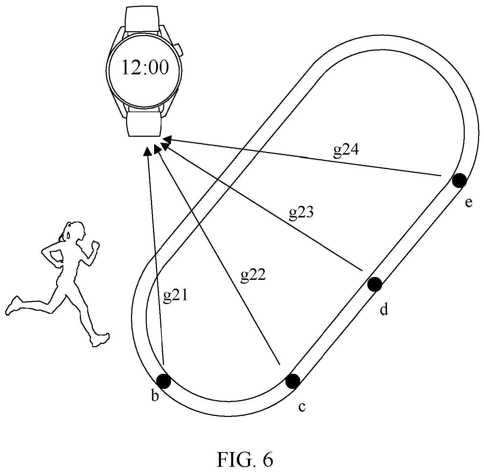

For example, as shown in FIG. 6, when running on a current playground, a user sequentially passes through a location point b, a location point c, a location d, and a location point e. In this case, a watch may sequentially obtain first positioning data g21 of the user at the location point b, first positioning data g22 of the user at the location point c, first positioning data g23 of the user at the location point d, and first positioning data g24 of the user at the location point e.

In some embodiments, the watch may obtain a plurality of pieces of first positioning data of the user within a second preset length. The second preset length represents a distance for which the user needs to run on a target playground. In addition, the plurality of pieces of first positioning data are positioning data existing when the user is at different locations within the second preset length. The second preset length may be 1/4, 1/3, 1/2, or the like of a total length of a specific target track on the target playground. For example, when the length of the target track is 400 meters, the second preset length may be 100 meters, 200 meters, or the like.

In some embodiments, the plurality of pieces of first positioning data may further represent positioning data corresponding to location points spaced apart at a preset distance within the second preset length. A shorter preset distance indicates more first positioning data, and accuracy of the target playground determined based on the first positioning data may be more reliable. In addition, the plurality of pieces of first positioning data may further represent a preset quantity of first positioning data. A larger preset quantity indicates more reliable accuracy of the determined target playground.

When checking the target playground based on the plurality of pieces of first positioning data of the user on the target playground, the watch may obtain a data error of each of the plurality of pieces of first positioning data. If the data error of each piece of first positioning data is less than or equal to a first preset difference, it is determined that the target playground is accurate. Subsequently, a playground corresponding to the target playground may be used to continue to position the user, determine a running route of the user, and the like.

In some embodiments, when obtaining the data error of the first positioning data, the watch may determine, based on the first positioning data, a location area, in a historical playground, of a location point corresponding to the first positioning data. The historical playground may include a plurality of location areas, for example, a straight track area and a semicircular track area. Then, the watch determines a reference location of the historical playground based on the location area in which the location point corresponding to the first positioning data is located. The reference location of the historical playground may include a long axis of the historical playground, a circle center of a semicircular track of the historical playground, and the like. In addition, the watch determines a second distance between the location point corresponding to the first positioning data and the reference location, and obtains a third distance between the location area in which the location point corresponding to the first positioning data is located and the reference location. Finally, the watch determines an absolute value of a difference between the second distance and the third distance as the data error of the first positioning data. If the data error of each piece of first positioning data is less than or equal to the first preset difference, it is determined that the accuracy of the target playground is high, and the target playground may continue to be used.

In addition, the reference location may alternatively be any point, line, area, or the like on a candidate playground. Because a track of the playground has a standard specification, distances between different location areas and the reference location may be determined when the reference location is known. The third distance may represent a standard distance or a reference distance.

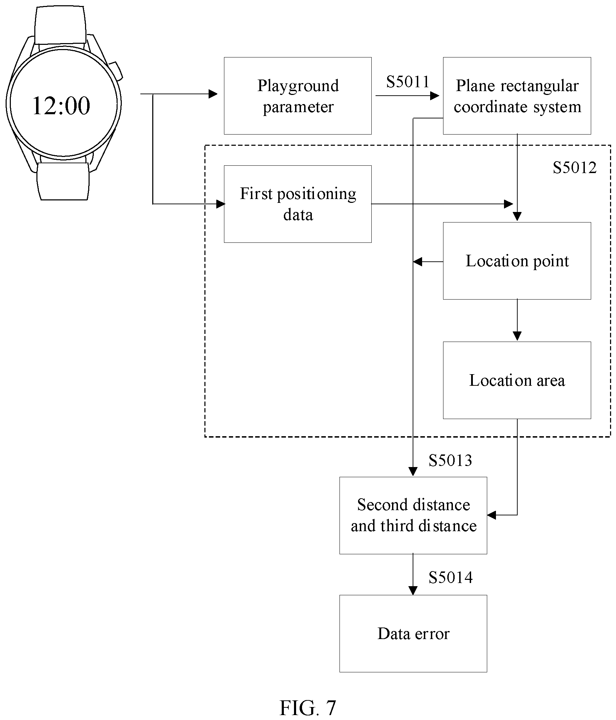

For example, as shown in FIG. 7, when obtaining the data error of the first positioning data, the watch may perform the following steps S5011 to S5014.

S5011: The watch establishes a plane rectangular coordinate system based on a playground parameter of a pre-stored target playground.

For example, an origin of the plane rectangular coordinate system is a point corresponding to center point positioning data in the playground parameter, a Y axis of the plane rectangular coordinate system points to a due north direction, and an included angle between a long axis of the target playground and the Y axis is a playground deflection angle in the playground parameter.

S5012: The watch converts the first positioning data into a location point (or a coordinate point) in the plane rectangular coordinate system, and determines a location area of the location point on the target playground based on coordinates of the location point, a coordinate point range of a semicircular track of the target playground, and a coordinate point range of a straight track of the target playground. For example, whether the location point is on the semicircular track or the straight track is determined.

S5013: Based on the location area of the location point on the target playground, the watch determines a reference location of the target playground, determines a second distance between the location point and the reference location, and obtains a third distance between the location area and the reference location.

For example, if the location point is on the semicircular track, a circle center of the semicircular track of the target playground is determined as the reference location. Alternatively, if the location point is on the straight track, the long axis of the target playground is determined as the reference location. The long axis is an axis on which a connection line between circle centers of two semicircular tracks of the target playground is located.

When the location point is on the semicircular track, the second distance is a distance between the location point and the circle center of the semicircular track, and the third distance is a radius of a semicircular track of a standard-specification track. When the location point is on the straight track, the second distance is a distance between the location point and the long axis, and the third distance is a distance between a straight track of a standard-specification track and the long axis.

In some embodiments, the watch may pre-store standard-specification track data corresponding to each historical playground. In the standard-specification track data, a distance between a straight track and a long axis of the playground, a radius of a semicircular track, and the like may be obtained based on the track data.

For example, when controlling the watch to enable a playground mode, the user may select, on the watch, a track in the playground to run. Because the playground is a standard-specification playground, a length and a specification of each track in the playground are also determined. After the user selects a target track, the watch may also obtain track data of the target track from the pre-stored data.

S5014: The watch calculates an absolute value of a difference between the second distance and the third distance as the data error of the first positioning data, when the data error is less than or equal to a first preset difference, determines that the data error of the first positioning data corresponding to the location point is small, and when the data error is greater than the first preset difference, determines that the data error of the first positioning data corresponding to the location point is large.

In this embodiment of this application, the data error of the first positioning data may represent a possibility that the user is on the target playground when the first positioning data is obtained. When the data error is small, it may indicate that when the first positioning data is obtained, there is a high probability that the user is on the target playground. However, when the data error is small, it may indicate that when the first positioning data is obtained, there is a low probability that the user is on the target playground.

A data error of each of the plurality of pieces of first positioning data may be calculated based on the foregoing method. In addition, for the target playground, if data errors of a plurality of consecutive pieces of first positioning data are small, it may be considered that the user may remain on the target playground. In this case, the watch may continue to use the playground parameter corresponding to the target playground to obtain motion data such as a running route and a running speed of the user. In addition, accuracy of the target playground determined in this manner is also high.

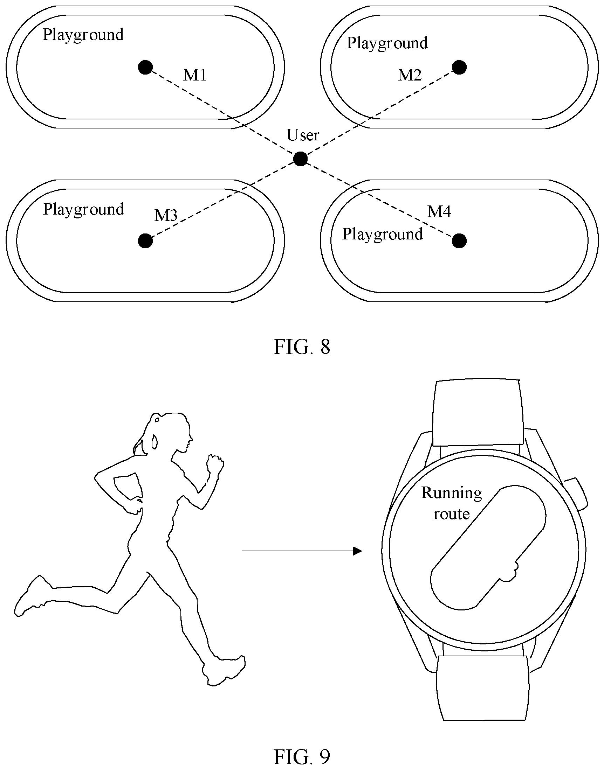

In some embodiments, when determining the target playground, the watch may further determine a plurality of target playgrounds. For example, as shown in FIG. 8, if the user is at a center of four playgrounds, first distances M1, M2, M3, and M4 between center points of the four playgrounds and the location of the user may all be less than or equal to the first preset length. In this case, the plurality of determined target playgrounds may be considered as candidate playgrounds. Then, the watch determines a true target playground from the candidate playgrounds based on the plurality of pieces of first positioning data.

When determining the target playground from the candidate playgrounds, the watch may first determine the data error of each of the plurality of pieces of first positioning data for one candidate playground. In this case, the plurality of pieces of first positioning data are positioning data existing when the user is at different locations within a third preset length. The third preset length may be 1/4, 1/3, 1/2, or the like of a total length of the target track selected by the user. For example, when the length of the target track is 400 meters, the second preset length may be 100 meters, 200 meters, or the like.

For a manner of determining the data error of the first positioning data, refer to the foregoing steps S5011 to S5014. When the data error of each piece of first positioning data is less than or equal to a second preset difference, a current candidate playground is determined as the target playground.

Both the second preset length and the third preset length may be used to determine the target playground, and both the second preset length and the third preset length are less than a length of a lap of the track. Therefore, in this embodiment of this application, a small quantity of positioning data is used to determine the target playground. In this way, time spent on obtaining the target playground and the playground parameter can also be reduced.

S502: After determining the target playground, the watch continues to obtain second positioning data of the user in the running process, and determines a running route of the user in the motion process on the target playground based on the plurality of pieces of first positioning data, the plurality of pieces of second positioning data, a third preset difference, and the playground parameter corresponding to the target playground.

In this embodiment of this application, the third preset difference (for example, the foregoing preset error threshold) may be within a range of 20 meters to 30 meters, for example, 20 meters, 25 meters, or 30 meters. In addition, the first preset difference and the second preset difference may be equal to the third preset difference, or may be less than the third preset difference.

It may be understood that the watch first obtains the first positioning data, and then obtains the second positioning data. In addition, the first positioning data may be used to determine the target playground, and both the first positioning data and the second positioning data may be used to determine the running route of the user.

When determining the running route of the user, the watch may still first determine a data error of each of the plurality of pieces of second positioning data for the target playground. For a specific manner of determining the data error, refer to the foregoing steps S5011 to S5014. The data error of the first positioning data is determined in the steps in the foregoing embodiments. Therefore, in this case, the watch may directly obtain the data error of each piece of first positioning data.

Then, the watch determines whether a data error of each piece of positioning data in the plurality of pieces of first positioning data and the plurality of pieces of second positioning data is less than or equal to the third preset difference. The watch may align a location point corresponding to positioning data whose data error is less than or equal to the third preset difference to a running route whose shape is the same as or similar to that of the current track of the user, to continue to generate or obtain a smooth running route. If positioning data whose data error is greater than the third preset difference appears, the watch may connect a location point corresponding to the positioning data to a previous location point, to continue to generate or obtain a running route.

It may be understood that, when the data error of the positioning data is less than or equal to the third preset difference, it may be considered that the user does not deviate from the current target track or deviates from the current target track for a quite small distance during running. In this case, alignment processing may be performed on the location point corresponding to the positioning data. When the data error of the positioning data is greater than the third preset difference, it may be considered that the user deviates from the current target track during running. In this case, to accurately reflect the running route of the user, alignment processing cannot be performed on the location point corresponding to the positioning data, but a running route of the user that deviates from the target track needs to be truly reflected.

The third preset difference is less than a threshold in a currently common playground mode. Therefore, even if the user deviates from the target track for a quite small distance, the electronic device can accurately obtain a location at which the user deviates from the target track, to provide an overall route of the user running in the playground mode more accurately, provide a reference for the user, and improve user experience. For example, as shown in FIG. 9, after obtaining the running route of the user, the watch may also display the route. In addition, the displayed route may intuitively and accurately display a route obtained after the user deviates from the target track.

In addition, in the method for obtaining motion data in this embodiment of this application, the electronic device may store the playground parameter of the historical playground of the user motion. When the user moves on the stored historical playground again, the historical playground (that is, the target playground) and the playground parameter can be quickly obtained without a need to spend excessive time re-determining the playground parameter. This can improve efficiency of obtaining the target playground and the playground parameter by the electronic device.

In some embodiments, the watch may further first determine the location of the user on the target playground based on the first positioning data, the second positioning data, and pre-stored playground data corresponding to the target playground, and then determine the motion data such as a running speed and a running length of the user based on different locations of the user on the target playground in the motion process.

For example, after obtaining the playground parameter of the target playground, the watch determines the center point location based on the playground center point positioning data in the playground parameter, and establishes, with reference to the playground deflection angle in the playground parameter, the plane rectangular coordinate system corresponding to the target playground. Then, the watch converts the obtained first positioning data and second positioning data into location points in the plane rectangular coordinate, to determine different locations that are of the user on the target playground and that exist when the first positioning data and the second positioning data are obtained. The watch may determine a running length, a running speed, and the like of the user based on a plurality of different locations.

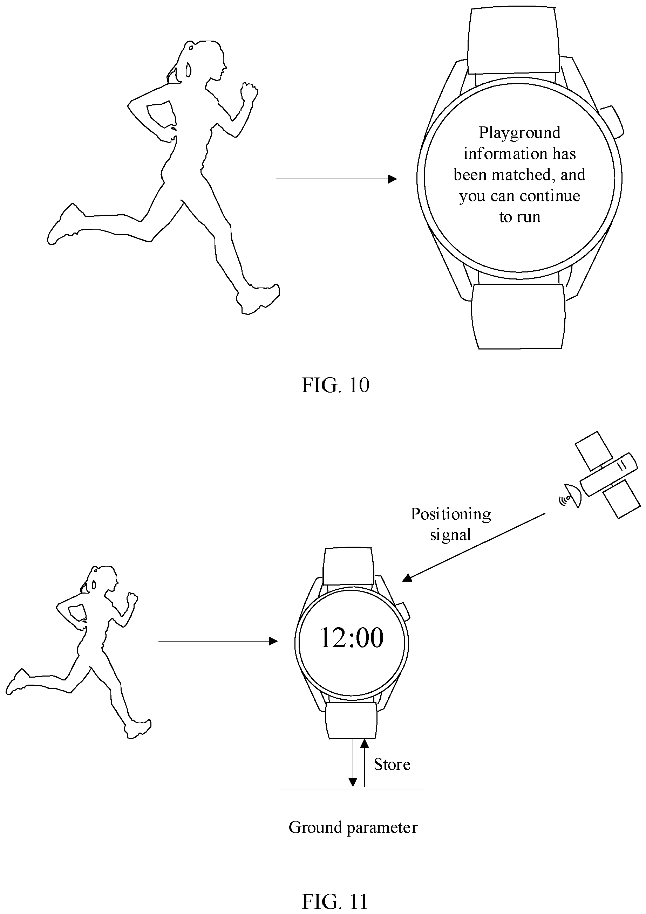

In some embodiments, after obtaining the target playground, the watch may display prompt information to the user, so that the user learns that the target playground is matched currently. For example, as shown in FIG. 10, after obtaining the target playground, the watch may display, on a display page, prompt information such as "Playground information has been matched, and you can continue to run".

In some embodiments, the watch may further determine a target playground parameter of the target playground, that is, a new playground parameter, based on a plurality of pieces of third positioning data of the user in the running process. The plurality of pieces of third positioning data may include the plurality of pieces of first positioning data and a part of the plurality of pieces of second positioning data. A quantity of the third positioning data is less than a total quantity of the first positioning data and the second positioning data. For example, if the user runs a total of six laps on the target playground, the third positioning data may be all corresponding positioning data obtained when the user runs the first two laps.

After determining the new playground parameter, the watch continues to determine, based on a plurality of pieces of fourth positioning data of the user in the running process, which one of the new playground parameter and the previous playground parameter of the pre-stored target playground is more accurate. In this way, a more accurate playground parameter is stored to update the playground parameter. When the user runs on the same playground again, the watch may determine the motion data such as a running route of the user based on the more accurate playground parameter.

The plurality of pieces of fourth positioning data do not include the plurality of pieces of third positioning data, or a time point of obtaining the fourth positioning data is later than a time point of obtaining the third positioning data, and the plurality of pieces of fourth positioning data are positioning data in the plurality of pieces of second positioning data.

In some embodiments, the watch may first obtain a first parameter error of the new playground parameter of the target playground and a second parameter error of the previous playground parameter based on the fourth positioning data. Then, the first parameter error is compared with the second parameter error, to determine a playground parameter corresponding to a parameter error with a smaller error, and then store the playground parameter. For example, if the first parameter error is less than the second parameter error, it may be considered that the new playground parameter corresponding to the first parameter error is more accurate. In this case, the watch stores the new playground parameter, that is, replaces the previous playground parameter with the new playground parameter. However, if the first parameter error is greater than the second parameter error, it may be considered that the previous playground parameter corresponding to the second parameter error is more accurate. In this case, the watch still stores the previous playground parameter.

The first parameter error represents an average error of a plurality of data errors (for example, a plurality of first data errors) calculated based on each piece of fourth positioning data and the new playground parameter. For a manner of calculating the first data error of the fourth positioning data for the new playground parameter, refer to the foregoing steps S5011 to S5014.

The second parameter error represents an average error of a plurality of data errors (for example, a plurality of second data errors) calculated based on each piece of fourth positioning data and the previous playground parameter. For a manner of calculating the second data error of the fourth positioning data for the previous playground parameter, refer to the foregoing steps S5011 to S5014.

In this embodiment of this application, the first parameter error is small, and accuracy of the new playground parameter is high, so that the motion data such as a running route of the user determined based on the new playground parameter is also more accurate. In addition, the second parameter error is small, accuracy of the previous playground parameter is high, so that the motion data such as a running route of the user determined based on the previous playground parameter is also more accurate.

In the foregoing embodiments, after determining the target playground, the watch may further determine a new playground parameter of the target playground. In addition, after the user motion ends, a more accurate playground parameter in the new playground parameter and the previous playground parameter corresponding to the target playground is stored, to ensure that the playground parameter of the target playground is increasingly accurate, and that when the user runs on the same playground again, the watch may determine the motion data such as a running route of the user based on the more accurate playground parameter.

In some embodiments, when the user runs on the current playground, if the watch does not obtain the target playground based on the foregoing content, it may be considered that the watch does not store the current playground parameter, or the user runs on the current playground for the first time. In this case, as shown in FIG. 11, after the user runs one or two laps, the watch may determine a playground parameter of the current playground based on a plurality of pieces of fifth positioning data collected in this process, and store the playground parameter after the user motion ends. In this way, when the user comes to the playground again to run, the watch can quickly obtain the playground and the playground parameter without a need to spend excessive time re-determining the playground and the playground parameter through calculation. The fifth positioning data represents positioning data obtained by the user in one or two laps of running, and a quantity of the fifth positioning data is greater than a quantity of the first positioning data.

For example, when the watch determines the playground parameter of the current playground based on the plurality of pieces of fifth positioning data, because a quantity of the plurality of pieces of fifth positioning data is large, and the plurality of pieces of fifth positioning data may approximately include positioning data of the user running one to two laps, the watch may determine a center point of the playground based on the plurality of pieces of fifth positioning data, and then convert the plurality of fifth positioning data from a longitude and latitude coordinate system to a polar coordinate system to calculate an angular velocity, to obtain a deflection angle of the playground relative to the due north direction.

In the foregoing embodiments, an example in which the electronic device is a watch and the watch has a computing function and a storage function is used to describe the method for obtaining motion data in embodiments of this application. In some other embodiments, the electronic device may alternatively be a band, a mobile phone, a tablet computer, or the like.

The foregoing electronic device may store the historical ground and the ground parameter in storage space of the electronic device. For some electronic devices with large storage space, according to the method in embodiments of this application, all grounds (for example, a track and field ground, a sports field, and a playground) and ground parameters (for example, playground center point positioning data and a playground deflection angle) may also be pre-stored in the electronic device. Therefore, regardless of whether the user moves on a ground for the first time, the electronic device can correspondingly obtain the ground and a ground parameter, accelerating a speed of determining the ground, improving efficiency of determining a location of the user and the motion data, and improving use experience of the user.

Alternatively, according to the method in embodiments of this application, data transmission between the electronic device and a cloud device (for example, a cloud server) may also be implemented. An electronic device of each user may communicate with the cloud device, and upload, to a same cloud device, a corresponding ground and a ground parameter existing when each user moves, so that the cloud device may receive and store ground parameters of different grounds. Regardless of whether the user moves on a ground for the first time, the electronic device may obtain the ground and a ground parameter from the cloud device, accelerating a speed of determining the ground, improving efficiency of determining a location of the user and the motion data, and improving use experience of the user.

It may be understood that, to implement the foregoing functions, the electronic device includes corresponding hardware and/or software modules for performing functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. In actual implementation, there may be another division manner.

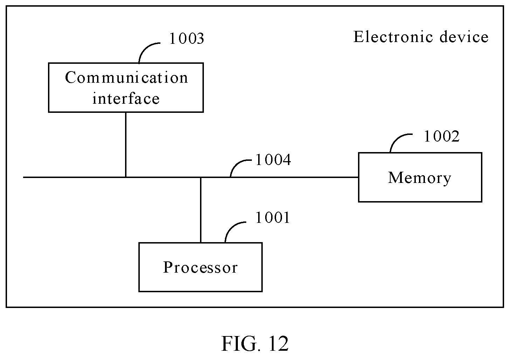

An embodiment of this application further provides an electronic device. As shown in FIG. 12, the electronic device may include one or more processors 1001, a memory 1002, and a communication interface 1003.

The memory 1002 and the communication interface 1003 are coupled to the processor 1001. For example, the memory 1002, the communication interface 1003, and the processor 1001 may be coupled together through a bus 1004.

The communication interface 1003 is configured to perform data transmission with another device. The memory 1002 stores computer program code. The computer program code includes computer instructions. When the computer instructions are executed by the processor 1001, the electronic device is enabled to perform the method for obtaining motion data in embodiments of this application.

The processor 1001 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processor may implement or execute various example logic blocks, modules, and circuits described with reference to content disclosed in the present disclosure. The processor may be a combination of processors implementing a computing function, for example, a combination including one or more microprocessors, or a combination of a DSP and a microprocessor.

The bus 1004 may be a peripheral component interconnect (Peripheral Component Interconnect, PCI) bus, an extended industry standard architecture (Extended Industry Standard Architecture, EISA) bus, or the like. The bus 1004 may be categorized as an address bus, a data bus, a control bus, or the like. For ease of representation, only one bold line is used to represent the bus in FIG. 12, but this does not mean that there is only one bus or only one type of bus.

An embodiment of this application further provides a computer-readable storage medium. The computer storage medium stores computer program code. When the processor executes the computer program code, the electronic device performs related method steps in the foregoing embodiments.

An embodiment of this application further provides a computer program product. When the computer program product is run on a computer, the computer is enabled to perform related method steps in the foregoing embodiments.

The electronic device, the computer storage medium, or the computer program product provided in this application is configured to perform the corresponding method provided above. Therefore, for beneficial effects that can be achieved, refer to the beneficial effects of the corresponding method provided above. Details are not described herein again.

The foregoing descriptions about implementations allow a person skilled in the art to clearly understand that, for convenient and brief description, division of the foregoing functional modules is taken as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of embodiments of this application. Any variation or replacement within the technical scope disclosed in embodiments of this application shall fall within the protection scope of embodiments of this application. Therefore, the protection scope of this application shall be subject to the protection scope of the claims.

## Claims

1. A method for obtaining motion data, applied to an electronic device, wherein the electronic device stores at least one historical ground and a ground parameter corresponding to the historical ground, and the method comprises:
after a playground mode is enabled, obtaining a plurality of pieces of first positioning data corresponding to different locations of a user in a motion process, and determining a target ground from the at least one historical ground based on the plurality of pieces of first positioning data and the ground parameter corresponding to the historical ground; and
obtaining a plurality of pieces of second positioning data corresponding to different locations of the user in the motion process, and determining a motion route of the user on the target ground in the motion process based on the plurality of pieces of first positioning data, the plurality of pieces of second positioning data, a ground parameter corresponding to the target ground, and a preset error threshold, wherein a time point of obtaining the second positioning data is later than a time point of obtaining the first positioning data.

2. The method according to claim 1, wherein the determining a target ground from the at least one historical ground based on the plurality of pieces of first positioning data and the ground parameter corresponding to the historical ground comprises:
determining a location point corresponding to target first positioning data in the plurality of pieces of first positioning data;
for each historical ground, obtaining a center point location of the historical ground based on the ground parameter corresponding to the historical ground, and obtaining a first distance between the center point location and the location point corresponding to the target first positioning data; and
determining the historical ground as the target ground if the first distance is less than or equal to a first preset length.

3. The method according to claim 2, wherein the determining the historical ground as the target ground if the first distance is less than or equal to a first preset length comprises:
if first distances corresponding to a plurality of historical grounds are less than or equal to first preset duration, using the plurality of historical grounds as a plurality of candidate grounds;
obtaining, for each candidate ground, a data error of each of the plurality of pieces of first positioning data based on a ground parameter corresponding to the candidate ground; and
if the data error of each piece of first positioning data is less than or equal to a preset difference, determining the candidate ground as the target ground.

4. The method according to claim 3, wherein the obtaining, for each candidate ground, a data error of each of the plurality of pieces of first positioning data based on a ground parameter corresponding to the candidate ground comprises:
for each piece of first positioning data, determining, based on the ground parameter corresponding to the candidate ground and the first positioning data, a location area, in the candidate ground, of a location point corresponding to the first positioning data, wherein the candidate ground comprises a plurality of location areas;
based on the location area, determining a reference location of the candidate ground, determining a second distance between the location point corresponding to the first positioning data and the reference location, and obtaining a third distance between the location area and the reference location; and
determining an absolute value of a difference between the second distance and the third distance as the data error of the first positioning data.

5. The method according to any one of claims 1 to 4, wherein the determining a motion route of the user on the target ground in the motion process based on the plurality of pieces of first positioning data, the plurality of pieces of second positioning data, a ground parameter corresponding to the target ground, and a preset error threshold comprises:
for the target ground, determining a data error of each piece of positioning data in the plurality of pieces of first positioning data and the plurality of pieces of second positioning data based on the ground parameter corresponding to the target ground; and
if positioning data whose data error is less than or equal to the preset error threshold exists, aligning a location point corresponding to the positioning data with a location point corresponding to previous positioning data, and continuing to obtain a motion route; or
if positioning data whose data error is greater than the preset error threshold exists, connecting a location point corresponding to the positioning data to a location point corresponding to previous positioning data, and continuing to obtain a motion route.

6. The method according to any one of claims 1 to 5, wherein the method further comprises:
determining a target ground parameter of the target ground based on a plurality of pieces of third positioning data corresponding to different locations of the user in the motion process, wherein the plurality of pieces of third positioning data comprise the plurality of pieces of first positioning data and a part of the plurality of pieces of second positioning data;
determining, based on a plurality of pieces of fourth positioning data corresponding to different locations of the user in the motion process, a first parameter error corresponding to the target ground parameter of the target ground, and a second parameter error corresponding to a stored ground parameter of the target ground, wherein a time point of obtaining the fourth positioning data is later than a time point of obtaining the third positioning data, and the plurality of pieces of second positioning data comprise the plurality of pieces of fourth positioning data; and
if the first parameter error is less than the second parameter error, updating the stored ground parameter corresponding to the target ground to the target ground parameter after user motion ends.

7. The method according to claim 6, wherein the determining, based on a plurality of pieces of fourth positioning data corresponding to different locations of the user in the motion process, a first parameter error corresponding to the target ground parameter of the target ground comprises:
for each piece of fourth positioning data, determining a first data error of the fourth positioning data based on the fourth positioning data and the target ground parameter; and
determining an average error of first data errors of the plurality of pieces of fourth positioning data, and determining the average error as the first parameter error.

8. The method according to either of claims 6 and 7, wherein the determining, based on a plurality of pieces of fourth positioning data corresponding to different locations of the user in the motion process, a second parameter error corresponding to a stored ground parameter of the target ground comprises:
for each piece of fourth positioning data, determining a second data error of the fourth positioning data based on the fourth positioning data and the stored ground parameter of the target ground; and
determining an average error of second data errors of the plurality of pieces of fourth positioning data, and determining the average error as the second parameter error.

9. The method according to any one of claims 1 to 8, wherein the method further comprises:
if no target ground is determined from the at least one historical ground based on the plurality of pieces of first positioning data and the ground parameter corresponding to the historical ground, obtaining corresponding fifth positioning data of the user in the motion process, wherein a quantity of the fifth positioning data is greater than a quantity of the first positioning data; and
determining, based on the fifth positioning data, a ground parameter of a ground on which the user is currently located, and after the user motion ends, storing the ground parameter of the ground on which the user is currently located.

10. The method according to any one of claims 1 to 9, wherein the ground parameter corresponding to the historical ground comprises ground center point positioning data and a ground deflection angle.

11. The method according to any one of claims 1 to 10, wherein the method further comprises:
displaying the motion route of the user in the motion process; or displaying the motion route after the user motion ends.

12. An electronic device, wherein the electronic device comprises a memory and one or more processors, the memory is coupled to the processor, the memory stores computer program code, the computer program code comprises computer instructions, and when the computer instructions are executed by the processor, the electronic device is enabled to perform the method for obtaining motion data according to any one of claims 1 to 11.

13. A computer-readable storage medium, wherein the computer-readable storage medium stores instructions, and when the instructions are run on a computer, the computer is enabled to perform the method for obtaining motion data according to any one of claims 1 to 11.
